# EUROPÄISCHE PATENTSCHRIFT

(11) **EP 0 411 459 B1**
(45) Veröffentlichungstag und Bekanntmachung des Hinweises auf die Patenterteilung: **10.02.1993**
(21) Anmeldenummer: 90114252.1
(22) Anmeldetag: 25.07.1990
(51) Int. Cl.: B23K 37/053

(54) **Vorrichtung zum Zentrieren und Spannen von Rohrwerkstücken**
Device for centring and clamping tubular workpieces
Dispositif pour centrer et tendre des pièces à usiner de tuyaux

(30) Priorität: 03.08.1989 DE 8909391 U
(43) Veröffentlichungstag der Anmeldung: 06.02.1991
(73) Patentinhaber: Tesch, Klaus, D-22301 Hamburg (DE)
(72) Erfinder: Tesch, Klaus, D-22301 Hamburg (DE)
(74) Vertreter: Glawe, Delfs, Moll & Partner

(56) Entgegenhaltungen:
- EP-A- 0 249 079

## Beschreibung

Die Erfindung betrifft eine Vorrichtung zum Zentrieren und Spannen von miteinander zu verschweißenden Rohrwerkstücken, die beiderseits eines mit Schutzgaszuführung versehenen Schweißbereichs Spanneinheiten aufweist, die nach außen sich keilförmig öffnende und je eine Spanngliederreihe enthaltende Spann-Nuten aufweisen, deren Nutwände von axial relativ zueinander bewegbaren Ringteilen gebildet sind, die auf einem Haltekörper lösbar angeordnet sind und von denen die äußersten über eine Zugstange und einen Antriebskörper in Richtung aufeinanderzu mit einer Kraft beaufschlagbar sind.

Eine bekannte Vorrichtung dieser Art (EP-A-0 249 079) hat den Vorteil, daß mit ihr sehr wirksam Rohrwerkstücke zentriert und gespannt werden können, wobei diese Vorrichtung durch Umstekken ihrer Einzelteile für verschiedenen Anwendungsfälle ein- bzw . umgerüstet werden kann (Verbinden eines geraden Rohrstücks mit einem gekrümmten Rohrstück, Verbinden eines geraden Rohrstücks mit einem Flansch, Verbinden von zwei geraden Rohrstücken). Der Nachteil dieser vorbekannten Vorrichtung besteht aber darin, daß diese Vorrichtungen jeweils nur für einen sehr beschränkten Durchmesserbereich eingesetzt werden können. Müssen im Laufe der Zeit Rohre vieler unterschiedlicher Durchmesser verschweißt werden, so muß auch eine sehr große Anzahl entsprechender Vorrichtungen bereitgehalten werden. Dies erfordert nicht nur viel Platz, sondern ist auch finanziell sehr aufwendig.

Die Aufgabe der Erfindung besteht in der Schaffung einer Vorrichtung der eingangs genannten Art, die mit geringem finanziellen Aufwand und ohne viel Platz zu beanspruchen für unterschiedliche Rohrstärken verwendet werden kann.

Die erfindungsgemäße Lösung besteht darin, daß die eine Spann-Nut begrenzenden Ringteile als von den die anderen Spann-Nuten begrenzenden Ringteilen getrennte Elemente ausgebildet sind, daß die Ringteile jeder Spanneinheit miteinander in Axialrichtung beweglich verbunden sind, und daß zwischen den Spanneinheiten unterschiedlich lange hohlzylindrische Abstandsstücke vorgesehen sind, von denen eines die Schweißzone definiert.

Während bei der vorbekannten Vorrichtung die Ringteile bzw. die damit starr verbundenen Bereiche (z.B. der Schweißbereich) große axiale Abmessungen haben, sind bei der erfindungsgemäßen Vorrichtung die Ringteile als separate Elemente ausgebildet. Die viel Platz einnehmenden zylindrischen Abstandsstücke sind unabhängig von den Ringteilen und mit denselben nicht verbunden, so daß die Ringteile leicht gegen andere Ringteile geeigneten Durchmessers ausgewechselt werden können, während die zylindrischen Abstandsstücke zwischen den Ringteilen und auch das Abstandsstück, das den Schweißbereich trägt, für viele verschiedene Rohrdurchmesser verwendet werden können.

Es wäre an sich denkbar, pro Spanneinheit zwei völlig voneinander unabhängige Ringteile zusammen mit einer Spanngliederreihe zu verwenden. Dies ergibt aber eine große Anzahl von Einzelteilen, daß es zweckmäßiger ist, die Ringteile jeder Spann-Nut auf einer gemeinsamen Hülse gleitend anzuordnen, wobei in dieser Spanneinheit dann auch gleich die Spanngliederreihe festgehalten wird.

Hat man, wie dies bei einer vorteilhaften Ausführungsform der Fall ist, vier Spanneinheiten, so hat man in diesem Fall nicht zwölf Einzelteile (acht Ringteile und vier Spanngliederreihen), sondern lediglich vier zusammengesetzte Spanneinheiten.

Damit man die Spanneinheiten leicht zusammenbauen kann, sind die Ringteile auf der Hülse zweckmäßigerweise mit Sprengringen befestigt.

Bei einer vorteilhaften Ausführungsform ist vorgesehen, daß die Schutzgaszuführung im Haltekörper angeordnet ist, der mehrere Radialauslaßöffnungen aufweist, und daß der den Schweißbereich definierende Hohlzylinder im mittleren Bereich einen Innendurchmesser aufweist, der größer ist als der Außendurchmesser des Haltekörpers, während der Innendurchmesser in den Endbereichen dem Außendurchmesser des Haltekörpers entspricht.

Der den Schweißbereich tragende zylindrische Abstandskörper liegt also nur in der Nähe seiner Stirnflächen auf dem Haltekörper auf, während sich in seinem mittigen Bereich zwischen dem Abstandsstück und dem Haltekörper ein Hohlraum befindet, in dem das Schweißgas aus dem Haltekörper eindringen kann und von dort durch Bohrungen im Abstandsstück zur Schweißstelle strömen kann. Die anderen Bohrungen des Haltekörpers sind dabei durch die Abstandsstücke zugedeckt, die ganz am Haltestück anliegen, so daß durch hier angeordnete Ausströmöffnungen des Haltekörpers kein Schutzgas aus strömen kann. Selbstverständlich könnten auch diese Abstandsstücke ähnlich wie der Schweißbereich ausgebildet sein, wobei dann das Schutzgas zwar in den Hohlraum zwischen Haltekörper und Abstandsstück eindringen könnte, aber nicht herausströmen könnte, da diese Abstandsstücke keine nach außen führenden Bohrungen aufweisen.

Zweckmäßigerweise ist die Zugstange und/oder der Haltekörper mit Leitungen für ein Kühlmedium versehen, damit die Spannvorrichtung beim Schweißen nicht zu heiß wird.

Bei einer besonders vorteilhaften Ausführungsform sind die Spanngliederreihen Schrauben- oder Wendelfedern, die wiederum bei einer weiteren vorteilhaften Ausführungsform unterschiedliche Federkonstanten aufweisen. Auf diese Weise wird ein zweistufiger Spannvorgang möglich, indem bei zunächst geringerer Kraft durch den Antriebskörper sich die Spannvorrichtung an einem Rohrstück zentriert und erst anschließend bei größerer Antriebskraft auch das zweite Rohrstück zentriert wird. Dies erleichtert das gegenseitige Ausrichten.

Wenn die Abstandsstücke unterschiedliche Längen haben, besteht eine größere Zahl von Möglichkeiten, wie die Vorrichtung angeordnet werden kann.

Die Vorrichtung kann gleichzeitig mehrere Sätze von Spanneinheiten mit unterschiedlichen Außendurchmessern aufweisen, von denen dann für den Spann- und Zentriervorgang jeweils der Satz ausgewählt werden kann, der dem richtigen Rohrdurchmesser entspricht.

Normalerweise werden zum Zentrieren die Spanneinheiten konzentrisch sein. Man kann aber auch eine zusätzliche, ein wenig exzentrische Spanneinheit vorsehen. Diese kann dann als äußerste angeordnet werden, wenn ein Rohrbogen, der bis zu seinem Ende ohne gerades Endstück gekrümmt ist, mit einem geraden Rohrstück verbunden werden soll.

Die Erfindung wird im folgenden anhand einer vorteilhaften Ausführungsform unter Bezugnahme auf die beigefügten Zeichnungen beschrieben. Es zeigen:
Fig. 1 im Querschnitt eine Gesamtansicht einer Ausführungsform;
Fig. 2 eine Detaildarstellung der Vorrichtung der Fig. 1; und
Fig. 3 bis 5 die Vorrichtung der Erfindung bei drei unterschiedlichen Anwendungen.

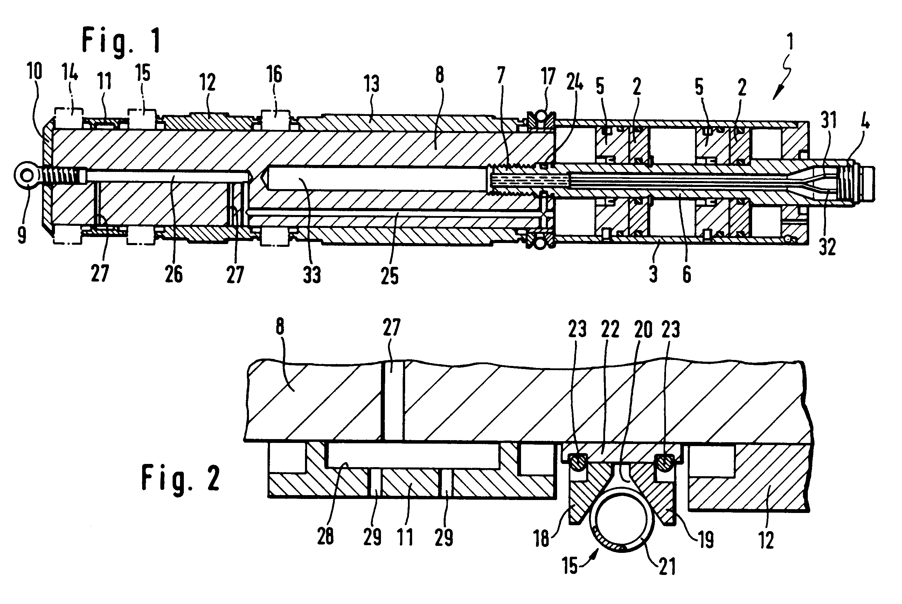

In Fig. 1 ist die im wesentlichen zylinderförmige Vorrichtung gezeigt, die in die zu spannenden und zentrierenden Rohrstücke einführbar ist. Der Antriebskörper 1 weist zwei Kolben 2 auf, die innerhalb eines Zylinders 3 gleitend angeordnet sind. Zwei Kolben 2 haben dabei bei an sich möglichem einzigen Kolben den Vorteil, daß bei vorgegebenem Druck des Druckfluids und vorgegebenem Außendurchmesser der Vorrichtung größere Spannkräfte erhalten werden. Über eine Fluidanschlußverbindung 4 und eine nicht gezeigte Leitung kann den Kammern des Zylinders 3 zwischen den festen Zwischenwänden 5 und den Kolben 4 Druckmedium zugeführt werden, so daß sich die Kolben 2 nach rechts bewegen. Bei dieser Bewegung ziehen die Kolben 3 die Kolbenstange oder Zugstange 6 nach außen, die an ihrem inneren Ende mit einer Schraubverbindung 7 mit einem Haltekörper 8 verschraubt ist, an dem an dessen vom Zylinder 3 entfernten Ende eine Zugöse 9, mit der die Vorrichtung in ein Rohr hineingezogen werden kann und ein Kopfstück 10 lösbar befestigt ist. Auf dem zylindrischen Haltekörper 8 sind in Axialrichtung gleitend weiter unten beschriebene Teile angeordnet. Auf diese Teile wirkt eine Druckkraft einerseits vom Kopfstück 10 und andererseits von der inneren Stirnfläche des Zylinders 3, wenn durch die Zugstange 6 ein Zug ausgeübt wird.

Die zwischen Kopfstück 10 und innerer Stirnfläche des Zylinders 3 angeordneten Teile weisen hohlzylinderförmige Abstandsstücke 11, 12 und 13 auf. Zwischen Kopfstück 10 und Abstandsstück 11, zwischen Abstandsstück 11 und Abstandsstück 12, zwischen Abstandsstück 12 und Abstandsstück 13 sowie zwischen Abstandsstück 13 und innerer Stirnfläche des Zylinders 3 ist jeweils eine Spanneinheit 14, 15, 16 bzw. 17 vorgesehen, von der die Einheiten 14, 15, 16 in Fig. 1 nur schematisch angedeutet sind.

Diese Spanneinheiten bestehen, wie dies in Fig. 2 deutlicher gezeigt ist, aus zwei Ringteilen 18, 19, die zwischen sich eine sich keilförmig öffnende Nut 20 einschließen, in die eine ringförmige Schrauben- oder Wendelfeder 21 eingesetzt ist. Die beiden Ringteile 18 und 19 befinden sind dabei auf einer Hülse 22 auf der sie mit Hilfe von Sprengringen 23 festgehalten sind. Die Hülse 22 wiederum ist gleitbar auf dem Haltekörper 8 angeordnet. Übt die Zugstange 6 eine Kraft aus, so wird der Haltekörper 11 in Fig. 2 nach rechts und der Haltekörper 12 nach links gedrückt, so daß die beiden Ringteile 18, 19 zusammengedrückt werden, wodurch die Schrauben- oder Wendelfeder 21 nach außen gedrückt wird und dadurch sich an das Rohr anlegt und dieses zentriert sowie spannt.

Normalerweise wird die Hülse 22 hohlzylindrische Form haben. Man kann aber auch eine Spanneinheit vorsehen (zweckmäßigerweise als fünfte), bei der die Innenbohrung der Hülse 22 exzentrisch zur äußeren Mantelfläche der Hülse 22 ist. Diese Spanneinheit kann dann als äußerste angeordnet werden, wenn ein Rohrbogen, der bis zu seinem Ende ohne gerades Endstück gekrümmt ist, mit einem geraden Rohrstück verbunden werden soll.

Die Schutzgaszuführung erfolgt durch die Fluidanschlußverbindung 4 und eine nicht gezeigte Leitung in der Zugstange 6 zu einer Umfangsnut 24 der Zugstange 6, von dort über Bohrungen 25 im Haltekörper 8 zu einem inneren Hohlraum 26 desselben, und von durch Radialbohrungen 27 nach außen. Dabei sind die Orte dieser Radialbohrungen 27 so gewählt, daß jeweils eine Bohrung 27 im Bereich des Abstandsstückes 11 ist, das den Schweißbereich trägt, während die andere Bohrung 27 oder andere Bohrungen durch die Abstandsstücke 12, 13 abgedeckt sind, und zwar in allen möglichen Stellungen, in denen die Abstandsstücke 11, 12 und 13 angeordnet werden können. Die Kühlwasserzufuhr und -abführung erfolgt über die Anschlußverbindung 4 und Leitungen 31, 32 in einem Innenhohlraum 33 des Haltekörpers 8.

Das Abstandsstück 11, das den Schweißbereich trägt, weist im Mittelteil einen Bereich 28 mit größerem Innendurchmesser auf, in das Schutzgas einströmen kann und dann anschließend aus den Öffnungen 29 dieses Abstandsstücks herausströmen kann. Wie dies aus der Fig. ersichtlich ist, hat das Abstandsstück 11, das den Schweißbereich trägt, einen etwas kleineren Außendurchmesser als die übrigen Abstandsstücke.

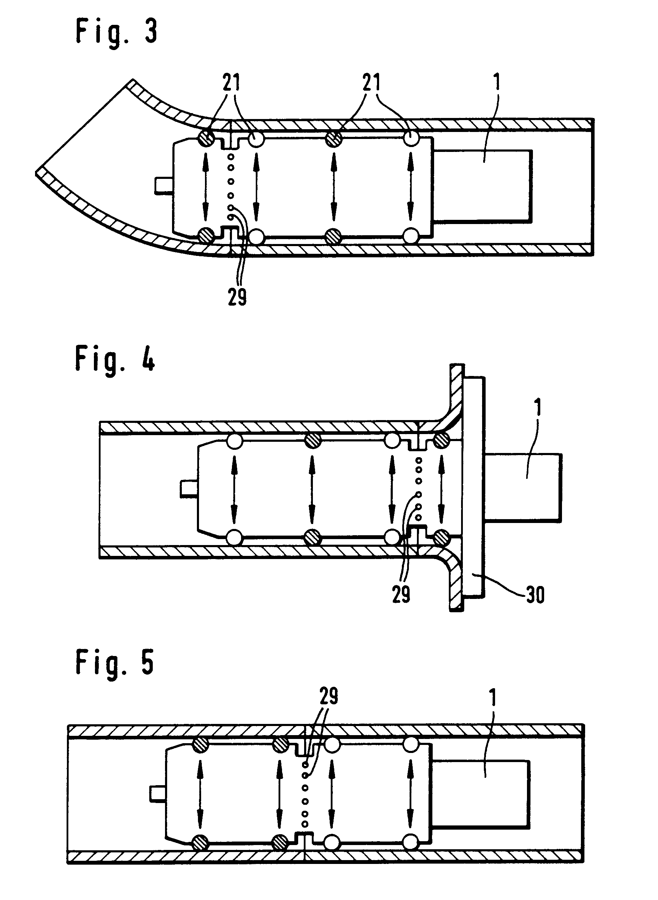

Durch Umstecken kann nun der Schweißbereich bzw. das Abstandsstück 11 entweder auf der dem Antriebskörper fernen oder der dem Antriebskörper nahen Seite oder aber in einer Mittelstellung angeordnet werden, wie dies in Fig. 3 bis 5 gezeigt ist. Vorher ist entweder die Schraubverbindung 7 zu lösen oder das Kopfstück 10 zu entfernen. In den Fig. 3 bis 5 erkennt man, daß man das Abstandsstück 11 mit den Schweißöffnungen 29 je nach Art der gewünschten Schweißung unterschiedlich anordnet. Bei der Stellung der Fig. 3 soll ein gerades Rohrstück mit einem gekrümmten Rohrstück verbunden werden. Bei der Anordnung der Fig. 4 soll ein gerades Rohrstück mit einem Flansch verbunden werden, zu welchem Zweck an der Vorrichtung noch ein Anschlagsflansch 30 befestigt wird. Bei der Ausführungsform der Fig. 5 sollen schließlich zwei gerade Rohrstücke miteinander verbunden werden.

In den Fig. 3 bis 5 sind durch Schraffierung auch die zwei unterschiedlichen Stärken der Schraubenfedern 21 angedeutet, wobei die schraffierten Schraubenfedern 21 die stärkeren Schraubenfedern sind. Die Wirkungsweise ist dabei bei der Anordnung der Fig. 3 so, daß bei zunächst kleiner Zugkraft durch die Zugstange 6 die beiden schwächeren (nicht schraffiert dargestellten) Schraubenfedern die Vorrichtung im geraden Rohrstück zentrieren. Anschließend kann dann das gekrümmte Rohrstück aufgesetzt werden, das erst dann von den stärkeren Schraubenfedern zentriert wird, wenn die Zugkraft erhöht wird. Bei den Anordnungen der Fig. 4 und 5 tritt ein analoges Verhalten auf.

## Patentansprüche

1. Vorrichtung zum Zentrieren und Spannen von miteinander zu verschweißenden Rohrwerkstücken, die beiderseits eines mit Schutzgaszuführung versehenen Schweißbereichs Spanneinheiten (14-17) aufweist, die nach außen sich keilförmig öffnende und je eine Spanngliederreihe (21) enthaltende Spann-Nuten (20) aufweisen, deren Nutwände von axial relativ zueinander bewegbaren Ringteilen (18,19) gebildet sind, die auf einem Haltekörper lösbar angeordnet sind und von denen die äußersten (14,17) über eine Zugstange (6) und einen Antriebskörper (1,2) in Richtung aufeinanderzu mit einer Kraft beaufschlagbar sind, dadurch gekennzeichnet, daß die eine Spann-Nut (20) begrenzenden Ringteile (18, 19) als von den die anderen Spann-Nuten (20) begrenzenden Ringteilen (18, 19) getrennte Elemente ausgebildet sind, daß die Ringteile (18, 19) jeder Spanneinheit (15) miteinander in Axialrichtung beweglich verbunden sind, und daß zwischen den Spanneinheiten (14-16) hohlzylindrische Abstandsstücke (11, 12, 13) vorgesehen sind, von denen eines (11) die Schweißzone definiert.

2. Vorrichtung nach Anspruch 1, dadurch gekennzeichnet, daß die Ringteile (18, 19) jeder Spann-Nut (20) auf einer gemeinsamen Hülse (22) gleitend angeordnet sind.

3. Vorrichtung nach Anspruch 2, dadurch gekennzeichnet, daß die Ringteile (18, 19) auf der Hülse (22) mit Sprengringen (23) befestigt sind.

4. Vorrichtung nach einem der Ansprüche 1 bis 3, dadurch gekennzeichnet, daß die Schutzgaszuführung im Haltekörper (8) angeordnet ist, der mehrere Radialauslaßöffnungen (27) aufweist und daß der den Schweißbereich definierende Hohlzylinder (11) im mittleren Bereich einen Innendurchmesser aufweist, der größer ist als der Außendurchmesser des Haltekörpers (8), während der Innendurchmesser in Teilen der Endbereiche dem Außendurchmesser des Haltekörpers (8) entspricht.

5. Vorrichtung nach einem der Ansprüche 1 bis 4, dadurch gekennzeichnet, daß Zugstange (6) und/oder Haltekörper (8) mit Leitungen für ein Kühlmedium versehen sind.

6. Vorrichtung nach einem der Ansprüche 1 bis 5, dadurch gekennzeichnet, daß die Spanngliederreihen Schraubenfedern (21) sind.

7. Vorrichtung nach Anspruch 6, dadurch gekennzeichnet, daß sie Schraubenfedern (21) mit unterschiedlichen Federkonstanten aufweist.

8. Vorrichtung nach einem der Ansprüche 1 bis 7, dadurch gekennzeichnet, daß sie vier Spanneinheiten (14-17) aufweist.

9. Vorrichtung nach einem der Ansprüche 1 bis 8, dadurch gekennzeichnet, daß die Abstandsstücke (11, 12, 13) unterschiedliche Längen haben.

10. Vorrichtung nach einem der Ansprüche 1 bis 9, dadurch gekennzeichnet, daß sie mehrere Sätze von Spanneinheiten (14-17) mit unterschiedlichen Außendurchmessern aufweist.

11. Vorrichtung nach einem der Ansprüche 1 bis 10, dadurch gekennzeichnet, daß sie jeweils eine exzentrische Spanneinheit (14-17) aufweist.

## Claims

1. Device for centering and clamping tubular workpieces to be welded to each other, which on both sides of a welding area provided with a supply of inert gas has clamping units (14 - 17) which have clamping grooves (20) opening outwards in a wedge shape and each containing a row of clamping elements (21), the groove walls of which are formed by ring parts (18, 19) movable axially in relation to each other, which are arranged detachably on a holder and to the outermost (14, 17) of which a force can be applied via a pull rod (6) and drive units (1, 2) towards each other, characterised in that the ring parts (18, 19) limiting a clamping groove (20) are designed as elements separate from the ring parts (18, 19) limiting the other clamping grooves (20), that the ring parts (18, 19) of each clamping unit (15) are movably connected to each other in the axial direction, and that hollow cylindrical spacers (11, 12, 13), one of which (11) defines the welding zone, are provided between the clamping units (14 - 16).

2. Device according to claim 1, characterised in that the ring parts (18, 19) of each clamping groove (20) are arranged so that they slide on a common sleeve (22).

3. Device according to claim 2, characterised in that the ring parts (18, 19) are secured on the sleeve (22) with retaining rings (23).

4. Device according to one of claims 1 to 3, characterised in that the inert gas supply is arranged in the holder (8), which has several radial outlet openings (27), and that the inside diameter of the central area of the hollow cylinder (11) defining the welding area is larger than the outside diameter of the holder (8), whereas the inside diameter in parts of the end areas corresponds to the outside diameter of the holder (8).

5. Device according to one of claims 1 to 4, characterised in that pull rod (6) and/or holder (8) are provided with pipes for a cooling medium.

6. Device according to one of claims 1 to 5, characterised in that the rows of clamping elements are helical springs (21).

7. Device according to claim 6, characterised in that it has helical springs (21) with differing spring constants.

8. Device according to one of claims 1 to 7, characterised in that it has four clamping units (14 - 17).

9. Device according to one of claims 1 to 8, characterised in that the spacers (11, 12, 13) have differing lengths.

10. Device according to one of claims 1 to 9, characterised in that it has several sets of clamping units (14 - 17) with differing outside diameters.

11. Device according to one of claims 1 to 10, characterised in that it has an eccentric clamping unit (14 - 17) in each case.

## Revendications

1. Dispositif pour le centrage et le serrage de pièces tubulaires à souder entre elles, présentant, des deux côtés d'une zone de soudage munie d'une admission de gaz inerte de protection, des unités de serrage (14-17) présentant des rainures de serrage (20) qui s'ouvrent vers l'extérieur en forme de coin, contiennent chacune une série d'organes de serrage (21 ) et dont les parois sont formées par des éléments annulaires (18, 19) qui sont mobiles axialement l'un par rapport à l'autre et sont montés de façon détachable sur un corps de maintien, unités de serrage dont les deux plus externes (14, 17) peuvent être sollicitées par une force en direction l'une de l'autre au moyen d'une barre de traction (6) et d'un corps d'entraînement (1, 2), caractérisé en ce que les éléments annulaires (18, 19) qui limitent une rainure de serrage (20) sont réalisés sous forme d'éléments séparés des éléments annulaires (18, 19) limitant les autres rainures de serrage (20), en ce que les éléments annulaires (18, 19) de chaque unité de serrage (15) sont raccordés l'un à l'autre de façon mobile en direction axiale, et en ce qu'il est prévu, entre les unités de serrage (14-16), des pièces d'écartement cylindriques creuses (11, 12, 13), dont l'une (11) définit la zone de soudage.

2. Dispositif selon la revendication 1, caractérisé en ce que les éléments annulaires (18, 19) de chaque rainure de serrage (20) sont montés à glissement sur une douille commune (22).

3. Dispositif selon la revendication 2, caractérisé en ce que les éléments annulaires (18, 19) sont fixés sur la douille (22) avec des joncs (23).

4. Dispositif selon l'une quelconque des revendications 1 à 3, caractérisé en ce que l'admission de gaz inerte de protection est disposée dans le corps de maintien (8) qui présente plusieurs orifices radiaux d'échappement (27), et en ce que le cylindre creux (11) qui définit la zone de soudage présente, dans sa région moyenne, un diamètre intérieur qui est plus grand que le diamètre extérieur du corps de maintien (8), tandis que son diamètre intérieur dans des parties des régions d'extrémité correspond au diantre extérieur du corps de maintien (8).

5. Dispositif selon l'une quelconque des revendications 1 à 4, caractérisé en ce que la barre de traction (6) et/ou le corps de maintien (8) sont munis de conduits pour un fluide de refroidissement.

6. Dispositif selon l'une quelconque des revendications 1 à 5, caractérisé en ce que les séries d'organes de serrage sont des ressorts hélicoïdaux (21).

7. Dispositif selon la revendication 6, caractérisé en ce qu'il comporte des ressorts hélicoïdaux (21) ayant des constantes de rappel différentes.

8. Dispositif selon l'une quelconque des revendications 1 à 7, caractérisé en ce qu'il comporte quatre unités de serrage (14-17).

9. Dispositif selon l'une quelconque des revendications 1 à 8, caractérisé en ce que les pièces d'écartement (11, 12, 13) ont des longueurs différentes.

10. Dispositif selon l'une quelconque des revendications 1 à 9, caractérisé en ce qu'il comporte plusieurs jeux d'unités de serrage (14-17) ayant des diamètres extérieurs différents.

11. Dispositif selon l'une quelconque des revendications 1 à 10, caractérisé en ce l'une des unités de serrage (14-17) qu'il comporte est excentrée.
